# EUROPÄISCHE PATENTSCHRIFT

(11) **EP 1 693 589 B1**
(45) Veröffentlichungstag und Bekanntmachung des Hinweises auf die Patenterteilung: **10.09.2008**
(21) Anmeldenummer: 06001677.1
(22) Anmeldetag: 27.01.2006
(51) Int. Cl.: F16D 23/06

(54) **Synchronisiereinrichtung für ein Schaltgetriebe, insbesondere eines Kraftfahrzeuges**
Synchromesh for a gearbox, particularly of a motor vehicule
Dispositif de synchronisation pour boîte de vitesses, en particulier pour un véhicule automobile

(30) Priorität: 22.02.2005 DE 102005007957
(43) Veröffentlichungstag der Anmeldung: 23.08.2006
(73) Patentinhaber: ZF FRIEDRICHSHAFEN AG, 88038 Friedrichshafen (DE)
(72) Erfinder: Bader, Josef, 88045 Friedrichshafen (DE)

(56) Entgegenhaltungen:
- EP-A- 0 899 473
- FR-A- 2 556 437
- US-A- 3 529 484

## Beschreibung

Die Erfindung betrifft eine Synchronisiereinrichtung für ein Schaltgetriebe, insbesondere eines Kraftfahrzeuges nach dem Oberbegriff des Patentan-spruches 1.

Synchronisiereinrichtungen für Schaltgetriebe von Kraftfahrzeugen sind in unterschiedlichen Ausführungsformen bekannt, und zwar mit und ohne Sperrvorrichtung. Bei der so genannten Einkonus-Synchronisierung (bekannt unter Bezeichnung der Anmelderin ZF-B) weist ein Kupplungskörper einen Reibkonus auf, welcher mit einem Gegenkonus eines Synchronringes in Eingriff gebracht wird, um die unterschiedlichen Drehzahlen von Getriebewelle und des zu schaltendes Losrades anzupassen. Während bei der Einkonus-Synchronisierung nur eine Reibpaarung vorliegt, weist die bekannte Doppelkonus-Synchronisierung (bekannt unter der Bezeichnung der Anmelderin ZF-D) einen Doppelkonusring mit parallel zueinander angeordneten Kegelflächen auf - es liegen somit zwei Reibpaarungen vor, wodurch die Schaltkraft reduziert und die Reibmomentkapazität gesteigert wird. Nachteilig bei der Doppelkonus-Synchronisierung ist, dass sie engere Fertigungstoleranzen bedingt und damit zu höheren Herstellkosten führt. Bekannt ist ferner die so genannte Sperrbolzen-Synchronisierung, bei welcher zwei Synchronringe mit jeweils einem Innen- und einem Außenkonus in Eingriff mit den Losrädern gebracht werden, um die Drehzahlen anzupassen. Die Synchronringe weisen auf dem Umfang verteilte Sperrbolzen auf, welche in Bohrungen einer Schaltmuffe gehalten sind. Weitere Einzelheiten zu den bekannten Synchronisierungen ergeben sich aus der Fachliteratur, z. B. G. Lechner und H. Naunheimer, Fahrzeuggetriebe, 1994, Springer-Verlag, S. 225 - 260.

Eine weitere Sperrbolzensynchronisierung wurde durch die EP 0 492 836 B1 bekannt, wobei die Synchronringe jeweils einen Außenkonus aufweisen, welcher mit einem Gegenkonus an den Losrädern reibschlüssig zusammenwirkt. Nachteilig bei der bekannten Bauweise ist eine erhöhte Schaltkraft und ein reduziertes übertragbares Drehmoment.

Eine gattungsgemäße Synchronisiereinrichtung ist aus US-A-3,529,484 bekannt.

Es ist Aufgabe der vorliegenden Erfindung, bei einer Synchronisiereinrichtung der eingangs genannten Art eine geringere Schaltkraft bei erhöhtem Reibmoment zu erreichen, ohne dass die Fertigungskosten dadurch erhöht werden.

Diese Aufgabe wird durch die Merkmale des Patentanspruches 1 gelöst. Erfindungsgemäß ist vorgesehen, dass mindestens einer der beiden Synchronringe einen Doppelkonus aufweist und mit einem inneren sowie einem äußeren Kupplungsring, die entsprechende Gegenkonen aufweisen, in Eingriff gebracht werden kann. Mit dem Doppelkonus wird infolge der erhöhten Reibflächenanzahl eine geringere Schaltkraft und ein höheres Reibmoment erreicht. Außerdem sind die beiden Kupplungsringe über eine Wippe am Losrad axial abstützbar.

In vorteilhafter Ausgestaltung der Erfindung weisen die Kegelflächen des Doppelkonus entgegengesetzte Konizität auf. Damit wird der Vorteil erreicht, dass sich eine gleichmäßige Anpressung zwischen Innen- und Außenkonus ergibt.

In weiterer vorteilhafter Ausgestaltung der Erfindung sind die Kupplungsringe als Blechteile ausgebildet und weisen stirnseitig auf dem Umfang verteilte Lappen auf, welche in entsprechende Taschen des zugeordneten Losrades eingreifen und somit formschlüssig gehalten sind. Da die Kupplungsringe nicht spangebend bearbeitet werden müssen, ergibt sich der Vorteil geringer Herstellkosten.

In weiterer vorteilhafter Ausgestaltung der Erfindung stützen sich die beiden Kupplungsringe auf einer Wippe ab, welche ihrerseits über einen Drehpunkt gegenüber dem Losrad axial abgestützt ist. Damit wird der Vorteil erreicht, dass der äußere und der innere Kupplungsring axial und gegeneinander beweglich sind, so dass sich der Doppelkonus des Synchronringes gleichmäßig an den Innen- und den Außenkonus der Kupplungsringe anlegen kann. Fertigungstoleranzen werden damit ausgeglichen und eine effektive Drehmomentübertragung erreicht.

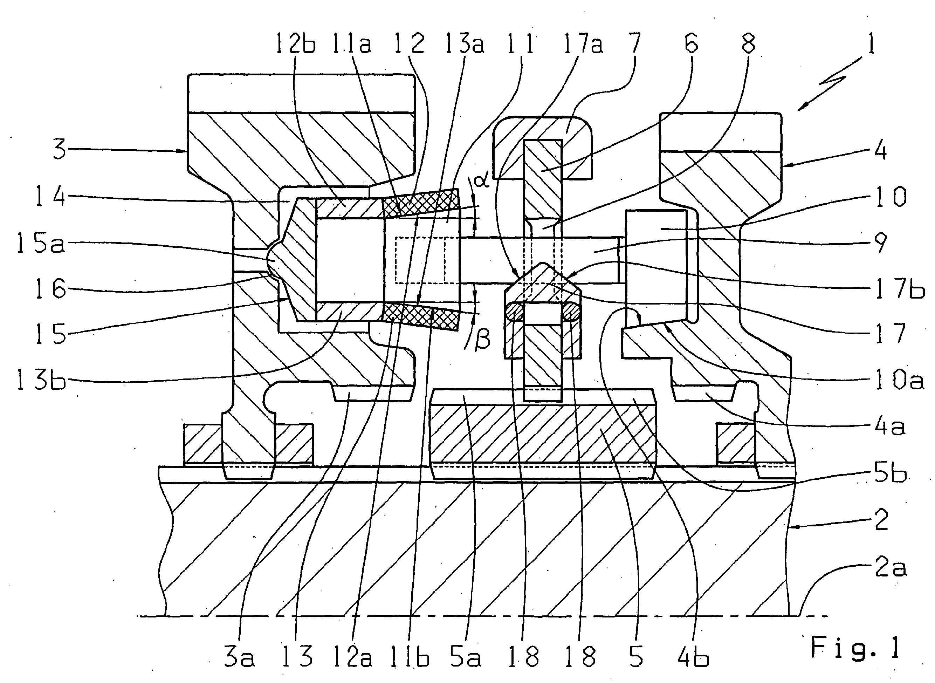

Ein Ausführungsbeispiel der Erfindung ist in der Zeichnung dargestellt und wird im Folgenden näher beschrieben.

Die einzige Figur zeigt eine Synchronisiereinrichtung 1 für ein nicht vollständig dargestelltes Schaltgetriebe eines Kraftfahrzeuges. Auf einer Getriebewelle 2 sind ein erstes Losrad 3 und ein zweites Losrad 4 drehbar gelagert und axial fixiert. Die als Zahnräder ausgebildeten Losräder 3, 4 stehen mit nicht dargestellten weiteren Zahnrädern zwecks Schaltung verschiedener Gänge in Zahneingriff. Die Losräder 3, 4 weisen jeweils eine Klauen- oder Innenverzahnung 3a, 4a auf. Zwischen beiden Losrädern 3, 4 ist eine axial auf der Getriebewelle 2 verschiebbare, jedoch drehfest mit der Getriebewelle 2 ver-bundene Schiebemuffe 5 angeordnet, welche eine Außenverzahnung 5a, 5b aufweist, welche bei Axialverschiebung der Schiebemuffe 5 entweder mit der Innenverzahnung 3a des Losrades 3 oder mit der Innenverzahnung 4a des Losrades 4 in Eingriff gebracht werden kann, wodurch eine Kupplung entweder des Losrades 3 oder des Losrades 4 mit der Getriebewelle 2 erreicht wird. An der Schiebemuffe 5 ist mittig ein ringscheibenförmig ausgebildeter Schalt-flansch 6 befestigt, d. h. in axialer und tangentialer Richtung fixiert. Der Schaltflansch 6 wird auf seinem äußeren Umfang von einem U-förmig ausgebildeten Schaltelement 7 (Gleitstein) gleitend umgriffen, welches getriebefest gelagert ist und eine Axialverschiebung der Schiebemuffe 5 zum Schalten der Gänge bewirkt. In dem Schaltflansch 6 sind, über den Umfang verteilt, vorzugsweise sechs Durchstecköffnungen 8 angeordnet, welche von Sperrbolzen 9 durchsetzt werden. Die Sperrbolzen sind wechselweise mit einem in der Zeichnung rechts angeordneten konventionellen Synchronring 10 und einem erfindungsgemäßen Synchronring 11 verbunden, z. B. eingegossen. Der konventionelle Synchronring 10 weist einen Innenkonus 10a (Einkonus) auf, welcher mit einem Außenkonus 4b des Losrades 4 eine Reibpaarung bildet. Der Synchronring 11 weist einen erfindungsgemäßen Doppelkonus, bestehend aus einem Außenkonus 11a und einem Innenkonus 11b auf. Der Außenkonus weist einen Konuswinkel α (Konizität) und der Innenkonus 11b einen Konuswinkel β auf, welcher entgegengesetzt zum Konuswinkel α ist - das in der Zeichnung dargestellte Profil des Synchronringes 11 bildet somit ein spitzwinkliges Trapez, d. h. mit Basiswinkeln 90- α bzw. 90 - β. Die Konuswinkel α und β sind vorzugsweise vom Betrag her gleich. Der Synchronring 11 steht mit seinem Außenkonus 11 a und seinem Innenkonus 11 b in reibschlüssigem Eingriff mit einem äußeren Kupplungsring 12 und einem inneren Kupplungsring 13, welche jeweils einen Gegenkonus 12a bzw. 13a aufweisen. Der äußere Kupplungsring 12 weist stimseitig, d. h. auf der dem Losrad 3 zugewandten Seite - über den Umfang verteilt angeordnet - Lappen 12b und der innere Kupplungsring 13 analoge Lappen 13b auf. Beide Kupplungsringe 12, 13 können als Blechteile ausgebildet und somit spanlos herstellbar sein. Im Losrad 3 sind im Bereich der Lappen 12b, 13b Taschen 14 eingeformt, in welche die Lappen 12b, 13b formschlüssig eingreifen und somit eine Reibmomentübertragung vom Synchronring 11 auf das Losrad 3 zwecks Drehzahlangleichung bewirken. Die Lappen 12b, 13b stützen sich an den Enden einer Wippe 15 ab, welche auf ihrer Rückseite einen halbkugelartig ausgebildeten Lagerpunkt 15a aufweist, der in einer Kalotte 16 des Losrades 3 aufgenommen ist. Durch diese differenzierte Abstützung der beiden Küpplungsringe 12, 13 können sich diese axial gegeneinander verschieben, so dass eine gleichmäßige Anlage zwischen den Konusflächen des Synchronringes 11 und den Konusflächen der beiden Kupplungsringe 12, 13 möglich ist.

In die Durchstecköffnungen 8 sind als Reiter ausgebildete Sperrkörper 17 formschlüssig eingesetzt, welche beispielsweise durch Ringfedern 18 gehalten werden. Die Sperrkörper 17 weisen in Richtung der Durchstecköffnung 8 abgeschrägte Sperrflächen 17a, 17b auf, welche gegenüber der Längsachse 2a der Getriebewelle 2 einen Winkel bilden. Der Sperrbolzen 9 weist eine den Sperrflächen 17a, 17b entsprechende Kerbe auf, in welcher der Spen-körper 17 zur Anlage kommt. Bezüglich der Wirkungsweise einer Sperrbolzen-Synchronisierung wird auf die eingangs genannte Fachliteratur (G. Lechner, Fahrzeuggetriebe) verwiesen, insbesondere auf die Seiten 258, 259.

Im dargestellten Ausführungsbeispiel ist auf der in der Zeichnung rechten Seite ein konventioneller Synchronring 10. und auf der in der Zeichnung linken Seite ein erfindungsgemäßer Synchronring 11 mit Doppelkonus dargestellt. Der Doppelkonus ist wegen der geringeren Schaltkraft insbesondere für einen niedrigen Gang vorteilhaft, während der Synchronring 10 mit Einfachkonus für den höheren Gang bestimmt ist. Möglich ist allerdings auch, beide Synchronringe mit einem erfindungsgemäßen Doppelkonus, entsprechenden Kupplungsringen und einer Wippe auszubilden.

### Bezugszeichen

- 1: Synchronisiereinrichtung
- 2: Getriebewelle
- 2a: Längsachse
- 3: Losrad
- 3a: Innenverzahnung
- 4: Losrad
- 4a: Innenverzahnung
- 4b: Außenkonus
- 5: Schiebemuffe
- 5a: Außenverzahnung
- 5b: Außenverzahnung
- 6: Schaltflansch
- 7: Schaltelement (Gleitstein)
- 8: Durchstecköffnung
- 9: Sperrbolzen
- 10: Synchronring
- 10a: Innenkonus
- 11: Synchronring
- 11a: Außenkonus
- 11b: Innenkonus
- 12: äußerer Kupplungsring
- 12a: Gegenkonus
- 12b: Lappen
- 13: innerer Kupplungsring
- 13a: Gegenkonus
- 13b: Lappen
- 14: Tasche
- 15: Wippe
- 15a: Lagerpunkt
- 16: Kalotte
- 17: Sperrkörper
- 17a: Sperrfläche
- 17b: Sperrfläche
- 18: Ringfeder

## Patentansprüche

1. Synchronisiereinrichtung für ein Schaltgetriebe, insbesondere eines Kraftfahrzeuges, mit einem ersten und einem zweiten auf einer Getriebewelle (2) drehbar gelagerten Losrad (3, 4), mit einer drehfest auf der Getriebewelle (2) angeordneten, axial verschiebbaren Schiebemuffe (5), welche über einen Zahneingriff mit dem ersten oder zweiten Losrad (3, 4) kuppelbar ist und einen Schaltflansch (6) mit auf dem Umfang angeordneten Durchstecköffnungen (8) aufweist, mit einem ersten und einem zweiten Synchronring (10, 11 ), welche über auf den Umfang verteilte, die Durchstecköffnungen (8) durchsetzende Sperrbolzen (9) auf Distanz haltbar sind, und mindestens einer der beiden Synchronringe (11) einen Außenkonus (11a) und einen Innenkonus (11b) (Doppelkonus) aufweist, der Doppelkonus (11a, 11b) mit einem einen Innenkonus (12a) aufweisenden äußeren Kupplungsring (12) und gleichzeitig mit einem einen Außenkonus (13a) aufweisenden inneren Kupplungsring (13) in Reibeingriff bringbar ist und die beiden Kupplungsringe (12, 13) formschlüssig von dem benachbarten Losrad (3) aufgenommen und axial abstützbar sind, **dadurch gekennzeichnet, dass** die beiden Kupplungsringe (12, 13) über eine Wippe (15) am Losrad (3) axial abstützbar sind.

2. Synchronisiereinrichtung (2) nach Anspruch 1, **dadurch gekennzeichnet, dass** der Außenkonus (11a) einen Konuswinkel α und der Innenkonus (11 b) einen Konuswinkel β aufweisen und dass die Konuswinkel α, β entgegengesetzt zueinander gerichtet und im Betrag vorzugsweise gleich sind.

3. Synchronisiereinrichtung nach Anspruch 1 oder 2, **dadurch gekennzeichnet, dass** die Kupplungsringe (12, 13) auf dem Umfang verteilt angeordnete Lappen (12b, 13b) aufweisen, welche formschlüssig in Taschen (14) des Losrades (3) eingreifen.

4. Synchronisiereinrichtung nach Anspruch 1, 2 oder 3, **dadurch gekennzeichnet, dass** die Wippen (15) in den Taschen (14) des Losrades (3) angeordnet und einen Wippbalken zwischen den Lappen (12b, 13b) des äußeren und des inneren Kupplungsringes (12, 13) bilden.

5. Synchronisiereinrichtung nach einem der Ansprüche 1 bis 4, **dadurch gekennzeichnet, dass** die Wippe (15) einen halbkugelförmigen Lager- und Abstützpunkt (15a) aufweist, der in einer Kalotte (16) des Losrades (3) aufgenommen ist.

## Claims

1. Synchronizing device for a manual transmission, especially of a motor vehicle, with a first and a second idler gear (3, 4) being bearing-supported on a transmission shaft (2), with an axially displaceable sliding sleeve (5) being nonrotationally arranged on the transmission shaft and coupleable via meshing teeth with the first or the second idler gear (3, 4) and featuring a shifting flange (6) with circumferentially arranged through holes (8), with a first and a second synchronizer ring (10,11), which by means of locking bolts (9) inserted in the circumferentially distributed through holes (8) can be kept at a distance, and with at least one of the two synchronizer rings (11) featuring an outer cone (11a) and an inner cone (11b) (dual cone), with the dual cone (11a, 11b) being capable of establishing frictional engagement with an outer clutch ring (12) featuring an inner cone (12a) and simultaneously with an inner clutch ring (13) featuring an outer cone (13a), and with the two clutch rings (12, 13) being positively held by the neighboring idler gear (3), and axially supportable, **characterized in that** the two clutch rings (12, 13) are axially supportable via a rocker (15) on the idler gear (3).

2. Synchronizing device (2) according to claim 1, **characterized in that** the outer cone (11a) possesses a cone angle α and the inner cone (11b) a cone mangle β, and that the cone angles α, β are arranged opposite to each other, with their angles preferably being identical.

3. Synchronizing device according to claim 1 or 2, **characterized in that** the clutch rings (12,13) feature circumferentially distributed lobes (12b, 13b) which positively mesh with pockets (14) of the idler gear (3).

4. Synchronizing device according to claim 1, 2 or 3, **characterized in that** the rockers (15) are arranged in the pockets (14) of the idler gear (3) and form a rocker bar between the lobes (12b, 13b) of the outer and inner clutch ring (12, 13).

5. Synchronizing device according to one of the claims 1 thru 4, **characterized in that** the rocker (15) features a hemispheric pivot and support point (15a) which is sustained in a spherical cap (16) of the idler gear (3).

## Revendications

1. Dispositif de synchronisation pour une boîte de vitesses mélanique, en particulier pour un véhicule automobile, comportant un premier et un deuxième pignons foux (3, 4) logés en votation sur un arbre de boîte de vitesses (2), un coulisseau (5) disposé solidaire en rotation et axialement déplaçable sur un arbre de boîte de vitesses (2), ce coulisseau pouvant être couplé par l'intermédiaire d'un engrénement de dents au premier ou deuxième pignons foux (3, 4) et une bridge de commande (6) avec des passagers (8) disposés sur le pourtour, avec un premier et un deuxième cônes synchro (10, 11), qui peuvent être tenus à distance par l'intermédiaire d'axes de verrouillage (9) répartis sur le pourtour, et traversants les passages (8), et au moins un des deux cônes synchro (11) comportant un cône extérieur (11a) et un cône intérieur (11b) (double cône), le double cône (11a, 11b) pouvant être porté en contact de frottement avec une bague d'accouplement extérieure (12) comportant un cône intérieur (12a) et en même temps avec une bague d'accouplement intérieure (13) comportant un cône extérieur (13a), et les deux bagues d'accouplement (12, 13) pouvant être logées et supportées axialement par engagement positif dans le pignon fou juxtaposé (3), **caractérisé en ce que** les deux bagues d'accouplement (12,13) peuvent être supportées axialement par un baladeur (15) sur le pignon fou (3).

2. Dispositif de synchronisation (2) selon la revendication 1, **caractérisé en ce que** le cône extérieur (11a) comporte un angle de cône a et le cône intérieur (11 b) comporte un angle de cône β et **en ce que** les angles de cône α, β, sont opposés l'un par rapport à l'autre et **en ce qu'**ils sont de préférence identiques en ce qui concerne leur valeur.

3. Dispositif de synchronisation selon la revendication 1 ou 2, **caractérisé en ce que** les bagues d'accouplement (12, 13) comportent des pattes (12b, 13b) réparties sur le pourtour, celles-ci rengrenant par liaison de forme dans des poches (14) du pignon fou (3).

4. Dispositif de synchronisation selon la revendication 1, 2 ou 3, **caractérisé en ce que** les baladeurs (15) sont disposés dans les poches (14) du pignon fou (3) et forment une poutrelle de bascule entre les pattes (12b, 13b) des bagues d'accouplement extérieure et intérieure (12, 13).

5. Dispositif de synchronisation selon une des revendications 1 à 4, **caractérisé en ce que** le baladeur (15) comporte un point de logement et de support hémisphérique (15a), logé dans une calotte (16) du pignon fou (3).
